# EUROPÄISCHE PATENTANMELDUNG

(11) **EP 1 387 148 A2**
(43) Veröffentlichungstag der Anmeldung: **04.02.2004**
(21) Anmeldenummer: 03013683.2
(22) Anmeldetag: 17.06.2003
(51) Int. Cl.: G01F 1/58

(54) **Verfahren zum Betrieb einer induktiven Durchflussmesseinrichtung,sowie Durchflussmesseinrichtung selbst**

(30) Priorität: 02.08.2002 DE 10235354
(71) Anmelder: ABB PATENT GmbH, 68526 Ladenburg (DE)
(72) Erfinder: Herwig, Jörg, Dipl.-Ing., 37139 (DE); Keese, Dieter, 37194 Wahlsburg (DE); Schwiderski, Hans W., Dipl.-Ing., 37176 Nörten-Hardenberg (DE)

(57) **Zusammenfassung**

Die Erfindung betrifft ein Verfahren zum Betrieb einer Durchflussmesseinrichtung, insbesondere einer induktiven Durchflussmesseinrichtung, sowie eine Durchflussmesseinrichtung selbst, gemäß Oberbegriff des Patentanspruches 1 und 6. Um hierbei temperaturbedingte und temperaturänderungsbedingte Verfälschungen des Messergebnisses zu vermeiden, ist erfindungsgemäß vorgeschlagen, dass direkt im Messrohr, oder über die Messeinrichtung selbst eine direkte Messung der Temperatur erfolgt.

## Beschreibung

Die Erfindung betrifft ein Verfahren zum Betrieb einer Durchflussmesseinrichtung, insbesondere einer induktiven Durchflussmesseinrichtung, sowie eine Durchflussmesseinrichtung selbst, gemäß Oberbegriff des Patentanspruches 1 und 6.

Als IDM bezeichnete induktive Durchflussmesseinrichtungen ermitteln den Volumenstrom eines elektrisch leitfähigen Mediums durch ein Messrohr. Hierzu koppeln die im besagten Messrohr wandseitig hineinragenden Elektroden an das strömende Fluidum an.

Messeinrichtungen dieser Art sind kompakt und ermitteln Volumenströme auf sehr zuverlässige Weise.

Zur Bestimmung des Volumenstromes wird die Temperatur oftmals als Korrekturgröße benötigt, da Temperaturänderungen während einer fortlaufenden Messung sowie gegenüber kalibrierten Zuständen die Messergebnisse verfälschen.

Der Erfindung liegt somit die Aufgabe zugrunde, eine Verfahren sowie eine Einrichtung der gattungsgemäßen Art dahingehend weiterzuentwickeln, dass temperaturbedingte und temperaturänderungsbedingte Verfälschungen des Messergebnisses vermieden werden.

Die gestellte Aufgabe wird bei einem Verfahren der gattungsgemäßen Art durch die kennzeichnenden Merkmale des Patentanspruches 1 gelöst.

Weitere vorteilhafte Ausgestaltungen des erfindungsgemäßen Verfahrens sind in den abhängigen Ansprüchen 2 bis 5 angegeben.

Im Hinblick auf eine Messeinrichtung der gattungsgemäßen Art ist die gestellte Aufgabe erfindungsgemäß durch die kennzeichnenden Merkmale des Patentanspruches 6 gelöst.

Weitere vorteilhafte Ausgestaltungen sind in den übrigen abhängigen Ansprüchen angegeben.

Kern der verfahrensgemäßen Erfindung ist es, dass direkt im Messrohr eine direkte Messung der Temperatur erfolgt.
Somit wird ortsnah und direkt die Temperatur gemessen. Die Temperaturmessung erfolgt dabei direkt, und ergibt somit einer sicheren Grundlage für die Temperaturberücksichtigung bei der Durchflussbestimmung. Volumendurchfluss und Temperaturmessung sind somit innerhalb ein und derselben Einrichtung möglich. Neben dem Effekt der ortsnahen und zutreffenden Temperaturkorrektur wird der Platzbedarf verringert und die Installations- und Wartungskosten werden verringert.

In weiterer vorteilhafter Ausgestaltung ist vorgesehen, dass die Temperaturmessung direkt im Bereich der Elektroden erfolgt.

In weiterer vorteilhafter Ausgestaltung ist vorgesehen, dass die Temperatur durch Messung der Leitfähigkeit über die vorhandenen oder über separate Elektroden erfolgt. In der erstgenannten Variante wird die Leitfähigkeitsbestimmung und daraus die Temperaturbestimmung zeitgleich zur Durchflussmessung durchgeführt.

In weiterer Ausgestaltung ist vorgeschlagen, dass die Temperaturbestimmung durch eine Messung der Veränderung des Galvanopotentials an den Messelektroden erfolgt.

Weiterhin ist vorteilhaft vorgeschlagen, dass die Temperatur über die Messung des Spulenwiderstandes der Erregerspulen erfolgt, indem bei bekannten Wärmeleitwiderständen der Einrichtung die Umgebungstemperatur in Korrelation gebracht wird.

Weiterhin ist vorteilhaft ausgestaltet, dass bei Anwendung einer der vorgeschlagenen Ausgestaltungen die Umgebungstemperatur daraus indirekt bestimmt wird.

Im Hinblick auf eine Einrichtung der gattungsgemäßen Art besteht der Kern der Erfindung darin, dass über Temperaturmesselemente direkt im Messrohr, oder über die Messeinrichtung selbst eine direkte Messung der Temperatur erfolgt. Die Temperatur wird somit ortsnah bestimmt, womit temperaturbedingte Korrelationen möglich sind.

In vorteilhafter Ausgestaltung sind Temperaturmesselemente in die Elektroden integriert. Damit wird die Temperatur wirklich in der Nähe der Strömung gemessen. Zum anderen sind die Temperaturmesselemente kompakt untergebracht.

In weiterer vorteilhafter Ausgestaltung ist angegeben dass die Bestimmung der Temperatur durch Mittel zur Messung und Bestimmung der elektrischen Leitfähigkeit bestimmt wird, und dies über die zur induktiven Ankopplung dienenden und vorhandenen Elektroden, oder über separate Elektroden erfolgt.

Weiterhin ist vorteilhaft ausgestaltet, dass zur Temperaturbestimmung Mittel zur Messung und Auswertung des Galvanopotentials an den Messelektroden vorgesehen sind.

In letzter vorteilhafter Ausgestaltung sind zur Temperaturbestimmung Mittel vorgesehen, bei denen über die Messung und Auswertung des Spulenwiderstandes der Erregerspulen dieselbe bestimmt wird.

Die Erfindung ist in der Zeichnung dargestellt und nachfolgend näher beschrieben.

Es zeigt:
Figur 1: Schematische Darstellung einer Durchflussmesseinrichtung mit Temperaturmesselementen.
Figur 2: Durchflussmesseinrichtung mit Mitteln zur Bestimmung der Temperatur über Widerstandsermittlung.

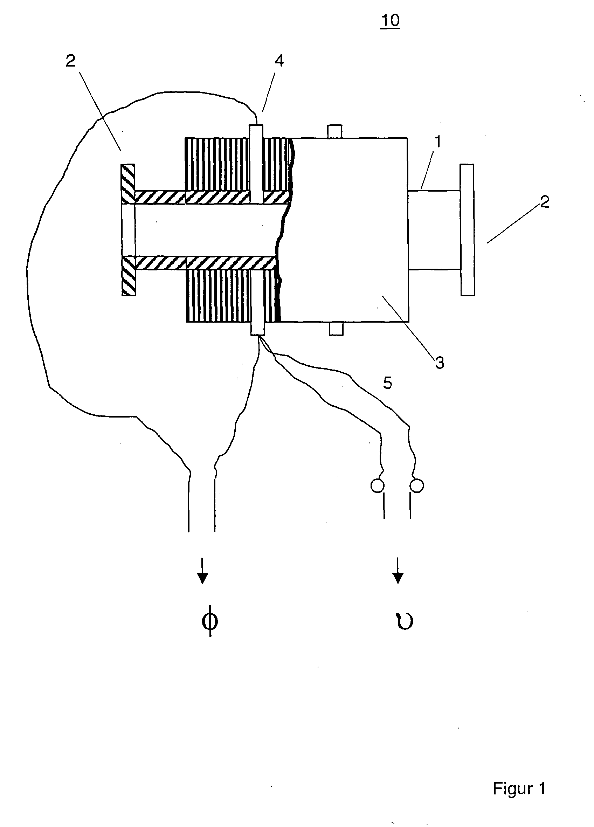

Figur 1 zeigt eine schematische Darstellung einer Durchflussmesseinrichtung mit Temperaturmesselementen 5. Die Durchlfußmesseinrichtung 10 induktiver Art besteht im wesentlichen aus einem Messrohr 1, durch welches das Messmedium hindurchfließt. Dieses Messrohr weist an beiden Enden Flansche 2 zum Anschluss in ein Rohrleitungssystem auf. Das Messrohr 1 ist über den Messabschnitt von einer Magnetanordnung 3 umgeben. Die Elektroden 4 welche durch das Messrohr hindurch galvanische Berührung mit dem Messmedium haben, sind durch die Wandung des Messrohres 1 geführt. Die angedeuteten Anschlussdrähte leiten das eigentliche Messsignal zur Bestimmung des Durchflusses φ.

In diesem Ausführungsbeispiel ist ein Temperaturmessfühler 5 direkt in die Elektrode 4 integriert. So kann die Temperatur υ ortsnah gemessen werden, und liefert einen Wert der so nah wie möglich am Messmedium aufgenommen wird.

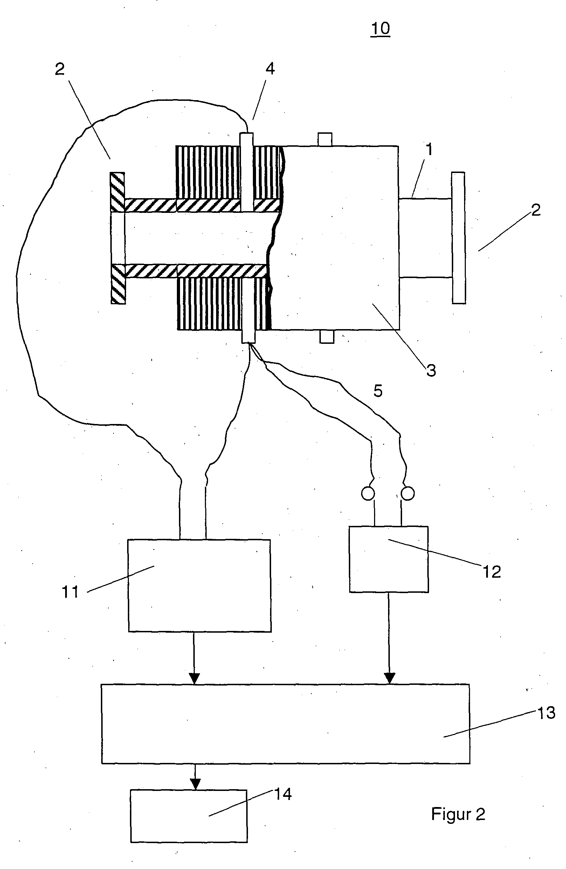

Figur 2 zeigt alle Elemente wie in Figur 1, jedoch hier schematisch mit allen Mittel zur korrelierten Bestimmung des Durchflusses. Zur Messung des Durchflusses sind die Signalführenden Dräht, welche von den Elektroden 4 kommen, mit den Mittel bzw der Einheit zur Bestimmung des Durchflusses verbunden. Dort enthaltene elektronische Mittel 11 berechnen aus dem entsprechenden Signal den zugehörigen Durchfluss.

Die Anschlussdrähte des in der Elektrode 4 integrierten Temperaturfühlers 5 werden einer Einheit bzw Mitteln zur Temperaturbestimmung 12 zugeführt.
Dabei können in dieser Einheit Signale von Thermoelementen ausgewertet werden. Es können aber auch Leitfähigkeitswerte, elektrische Widerstandswerte der Erregerspulen etc hier zur Bestimmung der Temperatur herangezogen werden. Wichtig ist in allen Fällen die Bestimmung der ortsnahen Temperatur.

In einer logisch nachgeschalteten Auswerteeinheit 13 findet eine korrelative Betrachtung und Bewertung von Durchflussbestimmung und Temperaturmessung statt.

Hier können Temperaturanhängige Korrekturen und Anpassungen durchgeführt werden.

In einer nachfolgenden Anzeige werden dann die Durchflusswerte, ggfs Temperaturkorrigiert angezeigt. Die Temperatur kann dabei noch zusätzlich gesondert angezeigt werden.

Statt einer direkten Temperaturmessung durch Thermoelemente etc kann aber auch durch Messung des Galvanopotentials eine Temperaturbestimmung erfolgen. Auch hierzu werden die Elektroden 4 benutzt.

Ebenso durch Ermittlung des Spulenwiderstandes der Magnetanordnung 3. In gleicher Weise werden damit die Temperaturen ortsnah bestimmt und mit den ermittelten Durchflusswerten in Korrelation gebracht.

### Bezugszeichenliste:

- 1: Messrohr
- 2: Flansch
- 3: Magnetanordnung
- 4: Elektroden
- 5: Integrierter Temperaturfühler
- 10: Durchflussmesseinrichtung
- 11: Mittel zur Durchflussbestimmung
- 12: Mittel zur Temperaturbestimmung
- 13: Korrelative Auswerteinheit
- 14: Anzeige

- φ: Durchfluß
- υ: Temperatur

## Patentansprüche

1. Verfahren zum Betrieb einer Durchflussmesseinrichtung, insbesondere einer induktiven Durchflussmesseinrichtung, bei welcher das Messmedium durch ein Rohr geleitet wird,
**dadurch gekennzeichnet,**
**dass** direkt im Messrohr, oder über die Messeinrichtung selbst eine direkte Messung der Temperatur erfolgt.

2. Verfahren nach Anspruch 1,
**dadurch gekennzeichnet,**
**dass** die Temperaturmessung direkt im Bereich der Elektroden erfolgt.

3. Verfahren nach Anspruch 1,
**dadurch gekennzeichnet,**
**dass** die Temperatur durch die Messung der Leitfähigkeit über die vorhandenen oder über separate Elektroden direkt bestimmt.

4. Verfahren nach Anspruch 1,
**dadurch gekennzeichnet,**
**dass** die Temperaturbestimmung durch eine Messung der Veränderung des Galvanopotentials an den Messelektroden erfolgt.

5. Verfahren nach Anspruch 1,
**dadurch gekennzeichnet,**
**dass** die Temperatur über die Messung des Spulenwiderstandes der Erregerspulen erfolgt, indem bei bekannten Wärmeleitwiderstanden der Einrichtung die Umgebungstemperatur in Korrelation gebracht wird.

6. Induktive Durchflussmesseinrichtung mit einem Messrohr, und diese umgebende Erregerspulen,
**dadurch gekennzeichnet,**
**dass** über Temperaturmesselemente (5) direkt im Messrohr (1), oder über die Messeinrichtung (10) selbst eine direkte Messung der Temperatur erfolgt.

7. Induktive Durchflussmesseinrichtung nach Anspruch 6,
**dadurch gekennzeichnet,**
**dass** Temperaturmesselemente (5) in die Elektroden (4) integriert sind.

8. Induktive Durchflussmesseinrichtung nach Anspruch 6,
**dadurch gekennzeichnet,**
**dass** die Messung der Temperatur durch eine Messung der Leitfähigkeit über die vorhandenen Elektroden (4), oder über im Messrohr (1) angeordnete separate Elektroden erfolgt.

9. Induktive Durchflussmesseinrichtung nach Anspruch 6,
**dadurch gekennzeichnet,**
**dass** zur Temperaturbestimmung Mittel zur Auswertung des Galvanopotentials an den Messelektroden (4) vorgesehen sind.

10. Induktive Durchflussmesseinrichtung nach Anspruch 6,
**dadurch gekennzeichnet,**
**dass** zur Temperaturbestimmung Mittel zur Messung und Auswertung des Spulenwiderstandes der Erregerspulen vorgesehen sind.
